# EUROPEAN PATENT SPECIFICATION

(11) **EP 1 680 999 B1**
(45) Date of publication and mention of the grant of the patent: **07.03.2007**
(21) Application number: 05425007.1
(22) Date of filing: 12.01.2005
(51) Int. Cl.: A47J 37/12, A47J 27/10

(54) **An apparatus for heating or cooking in bain-marie**
Wasserbadkochvorrichtung
Appareil de chauffage ou cuisson au bain-marie

(43) Date of publication of application: 19.07.2006
(73) Proprietor: Acopa S.r.L., 43100 Parma (IT)
(72) Inventor: Pattera, Gianni, 43100 Parma (IT)
(74) Representative: Gotra, Stefano

(56) References cited:
- GB-A- 191 317 453
- US-A- 4 215 267
- US-A- 4 726 288
- US-A- 5 345 063
- US-A1- 2002 014 481

## Description

This invention relates to an apparatus for heating or cooking in bain-marie of the type comprising a vessel that is partially filled with a liquid, means for heating the vessel and the liquid in said vessel, containers or bowls arranged inside the vessel that are used to hold the food to be heated or cooked in bain-marie.

The appliances known in the prior art, for industrial use or for use in dell-counters, canteens or restaurants, comprise vessels made of stainless steel containing 2.0 ÷ 2.5 liters of water and housing a plurality of bowls, made of stainless steel and essentially of a standard size, the borders of which rest upon the edge of the vessel and the bottoms of which are immersed in the water or come into contact with water or steam.

The water is heated so as to maintain the contents of the bowls at a temperature higher than 60 °C. There is also a thermostat, called operating thermostat, that is used to keep the food at an essentially constant temperature, by means of a sensor which measures the temperature of the water or of the steam inside the vessel.

A heating coil, consisting of a tubular element, is used to heat the vessel, and indirectly the water, the bowls and the food they contain.

It is also known (as disclosed in documents US-A-4 215 267 and US 2002/014481 A1) to use electrically heated plates, in contact with the vessel in correspondence to a recess of the vessel itself, in order to heat up the vessel.

More specifically, the coil or tubular element contains an electric resistor, which is electrically isolated from the outside. The tubular element is arranged so as to be in contact with the smooth bottom surface of the vessel and is heated electrically until it becomes incandescent (and turns the typical red colour). Said tubular element must be uniformly and completely in contact with the vessel in the attempt to transmit heat effectively (steel is a bad heat conductor) and also to prevent the resistance from burning due to insufficient heat dissipation. Should a portion of the tubular element become detached from the container said portion would overheat, due to the loss of heat transmission efficiency, and would eventually burn and become deformed, resulting in the breakdown of the entire system. Therefore, said operating thermostat, which must activate/deactivate the power supply to the resistance when the steam in the vessel reaches a predefined temperature, is not an adequate means of ensuring the reliability of the apparatus, or of preventing the tubular element from burning. In actual fact, said thermostat is ineffective, with regard to the protection of the tubular element, in two critical situations. A first critical situation relates to an uneven distribution of the temperature in the tubular vessel due, for instance, to the imperfect contact between the tubular element and the vessel. A second critical situation occurs when there is no water inside the vessel (for example due to excessive evaporation); in that case the operating thermostat would be triggered too late, as steel is a very poor heat conductor, and there would be no steam to enable heat transfer by convection.

Thus, one drawback of the prior art described above consists of the need to use safety thermostats (complex and expensive) to control the temperature of the resistance, in addition to the operating thermostat, in order to protect the tubular element and thus ensure the reliability of the entire apparatus.

Another drawback consists of the fact that the tubular element is subjected to deformation / elongation during heating and must therefore be fastened to the vessel by means of sliding rings or other appropriate fastening means, to allow it to deform and stretch while remaining in contact with the vessel.

Another drawback consists of the fact that, to ensure that the electric power is actually used to heat the vessel, such a heat not being lost in the surrounding environment, the lower part of the tubular element must be thermally insulated, for example by means of insulation elements, towards the opposite side in relation to the vessel, to insulate the tubular element from the external environment and ensure that the heat is transferred only (or mainly) towards the vessel.

The purpose of this invention is to overcome all the drawbacks described above, providing an apparatus for heating or cooking in bain-marie that is particularly simple, economical and reliable.

Said purpose is fully achieved with the apparatus according to this invention, which is characterized by the content of the appended claims and in particular by the fact that the means used to heat the vessel and the liquid inside the vessel comprise at least one electric plate arranged outside the vessel in contact therewith.

Said vessel preferably defines a hollow or bed on its external surface to house the plate, said hollow being preferably convex towards the outside of the vessel.

These and other characteristics will become more readily apparent from the following description of a preferred embodiment and the drawings attached hereto, which are merely illustrative and not limitative, in which:

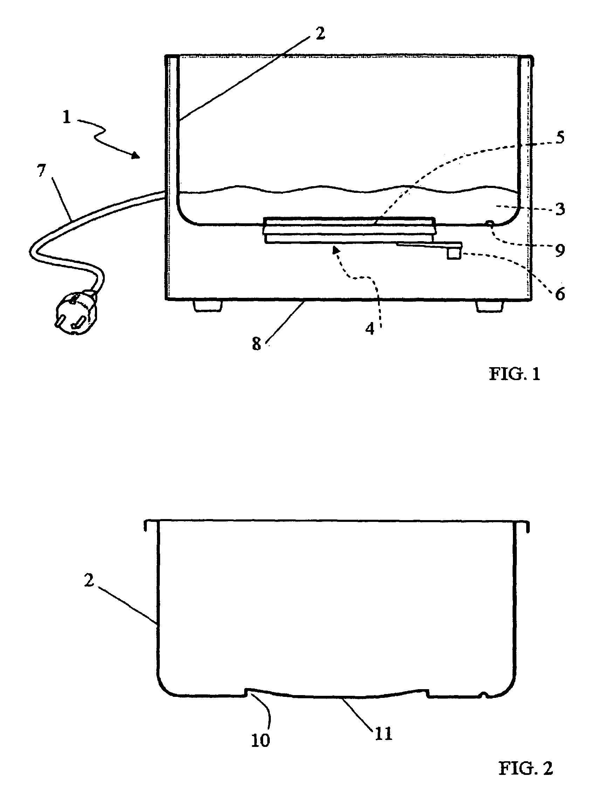

- figure 1 illustrates a partially cross-sectional view of the apparatus according to this invention;
- figure 2 illustrates a vessel according to this invention.

With reference to the drawings, 1 indicates an apparatus according to this invention; 2 indicates a vessel, made of stainless steel, partially filled with water 3. A plurality of bowls, which are not illustrated, can be arranged on the top of the vessel 2 to hold the food to be heated. 4 indicates an electrically-heated plate, fixed to the vessel 2 by fastening means (not illustrated in the drawings). Said plate 4 comprises a layer 5 made of a refractory material that is a good conductor of heat, for example cast iron, which is heated electrically, in a way that is substantially known in the prior art. An electric connection 6 connects the plate 4 to an electric power cable 7. The vessel 2 is housed in a jacket 8, that insulates it from the outside. The apparatus 1 also comprises a temperature sensor 9, which is arranged inside the vessel 2 and measures the temperature of the water 3. Said sensor 9 is operationally connected to an operating thermostat, which is not illustrated in the drawings, that activates/deactivates the power supply to the plate, in order to maintain the temperature of the water 3 or of the steam inside the vessel at an essentially constant temperature, which may be predefined. There is no risk for the plate 4 to get deformed or burning, since the heated layer 5 is made of a refractory material. Furthermore, the temperature is distributed uniformly throughout the layer 5, since it is made of a material that is a good conductor of heat. In addition, the heat is transferred in an essentially one-directional manner, i.e. from the plate 4 to the vessel 2. There is thus no need to install insulating means to insulate the plate 4 in relation to the outside of the vessel 2.

The vessel 2 defines a hollow or bed 10 in a portion of its external surface, that houses the plate 4. In particular, the layer 5 of the heated plate 4 fits into the hollow 10. In correspondence with said hollow 10 the vessel 2 defines a surface 11 that is convex towards the outside of the vessel. Said surface 11 is preferably elastically deformable, so that it is flat when the plate 4 is engaged in the hollow 10. Said deformation guarantees a complete contact between the heated layer 5 and a portion of the vessel 2, comprising the surface 11. Moreover, said deformation ensures an overpressure between the surface 11 and the layer 5, which facilitates the transfer of heat by conduction between the plate 4 and the vessel 2. The plate 4 does not overheat enough to become incandescent or burn, even if there is no water in the vessel 2, since the heated layer 5 is made of a refractory material, it is characterized by uniform temperature distribution and allows complete adhesion to the surface 11, through which it comes into contact with the vessel 4.

In a novel way, the apparatus 1 is reliable and robust and does not require the use of safety thermostats. Furthermore, the apparatus 1 is particularly economical (it costs 30-40% less than the appliances known in the prior art), as it does not require the use of insulating systems and allows a high efficiency in the production of energy heat the vessel, thanks to the efficiency with which the heat is transferred between the plate 4 and the vessel 2, and the limited loss of heat.

## Claims

1. An apparatus (1) for heating or cooking in bain-marie, comprising:
- a vessel (2) partially filled with liquid (3),
- means for heating the vessel (2) and the liquid (3) contained therein, comprising at least one electrically heated plate (4) arranged outside the vessel (2) in contact therewith, the vessel (2) defining, in its external surface, a hollow or bed (10), that houses the plate (4),
- containers or bowls arranged inside the vessel (2) and containing the food to be heated/cooked in bain-marie,
**characterized in that** the vessel (2) defines a surface (11) which is convex towards the outside of the vessel (2), in correspondence with said hollow (10).

2. An apparatus according to claim 1, incorporating means for fastening the plate (4) to the vessel (2) so that the heating surface of the plate comes into contact with the vessel.

3. An apparatus according to claim 1 or 2, in which said surface (11) is elastically deformable, thus being flat when the plate (4) is engaged in the hollow (10).

4. An apparatus according to claim 1, wherein the plate (4) comprises a layer (5) made of cast iron.

5. An apparatus according to claim 4, wherein there is an overpressure between the surface (11) and the layer (5).

6. An apparatus according to any of the previous claims, in which said plate (4) is **characterized by** uniform temperature distribution when heated.

## Patentansprüche

1. Wasserbadkochvorrichtung (1) umfassend:
- eine teilweise mit Flüssigkeit (3) gefüllte Wanne (2),
- Mittel zum Beheizen der Wanne (2) und der darin enthaltenen Flüssigkeit (3), umfassend mindestens eine elektrisch beheizte Platte (4), die auf der Aussenseit der Wanne (2) in Kontakt mit derselben angeordnet ist, wobei die Wanne (2) in ihrer Aussenfläche eine Aussparung bzw. Bett (10) zur Aufnahme der Platte (4) ausbildet,
- auf der Innenseite der Wanne (2) angeordnete Behälter oder Gefässe, welche die im Wasserbad zu kochenden Nahrungsmittel enthalten,
**dadurch gekennzeichnet, dass** die Wanne (2) in Höhe der genannten Aussparung (10) eine in Richtung auf die Aussenseite der Wanne (2) konvexe Oberfläche (11) ausbildet.

2. Vorrichtung nach Anspruch 1, umfassend Mittel zum Befestigen der Platte (4) an der Wanne (2), so dass die Heizfläche der Platte mit der Wanne in Berührung tritt.

3. Vorrichtung nach den Ansprüchen 1 oder 2, bei der die genannte Oberfläche (11) elastisch verformbar ist, so dass sie bei in die Aussparung (10) eingesetzter Platte (4) eben ist.

4. Vorrichtung nach Anspurch 1, bei der die Platte (4) eine Schicht (5) aus Gusseisen umfasst.

5. Vorrichtung nach Anspruch 4, bei der zwischen der Obefläche (11) und der Schicht (5) ein Überdruck herrscht.

6. Vorrichtung nach einem der vorhergehenden Ansprüche, bei der sich die genannte Platte (4) bei ihrer Beheizung durch eine gleichmässige Temperaturverteilung auszeichnet.

## Revendications

1. Appareil (1) de chauffage ou cuisson au bain-marie, comprenant:
- une vasque (2) partiellement remplie d'un liquide (3);
- des moyens de chauffage de la vasque (2) et du liquide (3) qu'elle contient, comprenant au moins une plaque chauffée électriquement (4) disposée à l'extérieur de la vasque (2) en contact avec cette dernière, la vasque (2) définissant, sur sa surface externe, un renfoncement ou logement (10) qui accueille la plaque (4);
- des conteneurs ou cuvettes disposés à l'intérieur de la vasque (2) et contenant la nourriture à chauffer/cuisiner au bain-marie;
**caractérisé en ce que** la vasque (2) définit une surface (11) convexe vers l'extérieur, en correspondance dudit renfoncement (10).

2. Appareil selon la revendication 1, comprenant des moyens de fixation de la plaque (4) à la vasque (2) de manière à ce que la surface de chauffage de la plaque entre en contact avec la vasque.

3. Appareil selon la revendication 1 ou 2, dans lequel ladite surface (11) est élastiquement déformable, de manière à être plate lorsque la plaque (4) est engagée dans le renfoncement (10).

4. Appareil selon la revendication 1, dans lequel la plaque (4) comprend une couche (5) réalisée en fer de fonte.

5. Appareil selon la revendication 4, dans lequel est présente une surpression entre la surface (11) et la couche (5).

6. Appareil selon n'importe laquelle des revendications précédentes, dans lequel ladite plaque (4) est **caractérisée par** une distribution uniforme de la température lorsqu'elle est chauffée.
